# EUROPEAN PATENT APPLICATION

(11) **EP 4 277 434 A1**
(43) Date of publication of application: **15.11.2023**
(21) Application number: 22736909.7
(22) Date of filing: 10.01.2022
(51) Int. Cl.: H04W 76/28, H04W 76/14, H04W 72/04, H04W 92/18, H04W 92/10, H04W 72/02, H04W 72/12

(54) **METHOD AND APPARATUS FOR RECEIVING COMPLETION MESSAGE RELATING TO SL DRX CONFIGURATION IN NR V2X**

(30) Priority: 11.01.2021 KR 20210003483; 17.05.2021 KR 20210063551; 28.07.2021 KR 20210099354; 04.08.2021 US 202163229479 P
(71) Applicant: LG Electronics Inc., Yeongdeungpo-gu Seoul 07336 (KR)
(72) Inventor: HONG, Jongwoo, Seoul 06772 (KR); BACK, Seoyoung, Seoul 06772 (KR); PARK, Giwon, Seoul 06772 (KR); LEE, Seungmin, Seoul 06772 (KR)
(74) Representative: Frenkel, Matthias Alexander
(86) International application number: PCT/KR2022/000379
(87) International publication number: WO 2022/149932

(57) **Abstract**

An embodiment proposes a method for performing wireless communication by a first device. The method may comprise the steps of: establishing a radio resource control (RRC) connection with a second device; receiving an SL discontinuous reception (DRX) configuration from the second device; transmitting the SL DRX configuration to a base station; and receiving a completion message relating to the SL DRX configuration from the base station. For example, transmission of auxiliary information may not be allowed until the first device receives the completion message.

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

### DISCLOSURE

### TECHNICAL PROBLEM

On the other hand, in sidelink communication, a UE may assign a sidelink discontinuous reception configuration (SL DRX configuration) to a peer UE, and conversely, a peer UE may also assign an SL DRX configuration to a UE. In this case, if a UE receives a request from a peer UE for an additional SL DRX configuration or assistance information while a peer UE is aligning SL DRX with the peer UE's serving network, there may be an issue of how to handle the alignment of SL DRX with the peer UE's serving network.

### TECHNICAL SOLUTION

In an embodiment, a method is proposed for a first device to perform wireless communication. The method may comprise: establishing a radio resource control, RRC, connection with a second device; receiving, from the second device, an SL discontinuous reception, DRX, configuration; transmitting, to a base station, the SL DRX configuration; and receiving, from the base station, a completion message for the SL DRX configuration. For example, a transmission of an assistance information may be not allowed before the first device receiving the completion message.

### ADVANTAGEOUS EFFECTS

By not transmitting additional SL DRX configuration or assistance information while a peer UE is aligning sidelink discontinuous reception (SL DRX) with the peer UE's serving network, alignment for SL DRX and Uu DRX can be performed over the networks of a transmitting UE and receiving UE.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows an example of a method for aligning an SL DRX to a Uu DRX with respect to TDM, according to an embodiment of the present disclosure.
FIG. 9 shows an example of a UE and a peer UE, according to an embodiment of the present disclosure.
FIG. 10 shows a procedure for a receiving UE to receive a completion message for SL DRX configuration from a base station, according to an embodiment of the present disclosure.
FIG. 11 shows an example of a receiving UE receiving a completion message for SL DRX configuration from a base station, according to an embodiment of the present disclosure.
FIG. 12 shows a method for a first device to receive, from a base station, a completion message for an SL DRX configuration, according to an embodiment of the present disclosure.
FIG. 13 shows a method for a second device to transmit, to a first device, SL DRX configuration, according to an embodiment of the present disclosure.

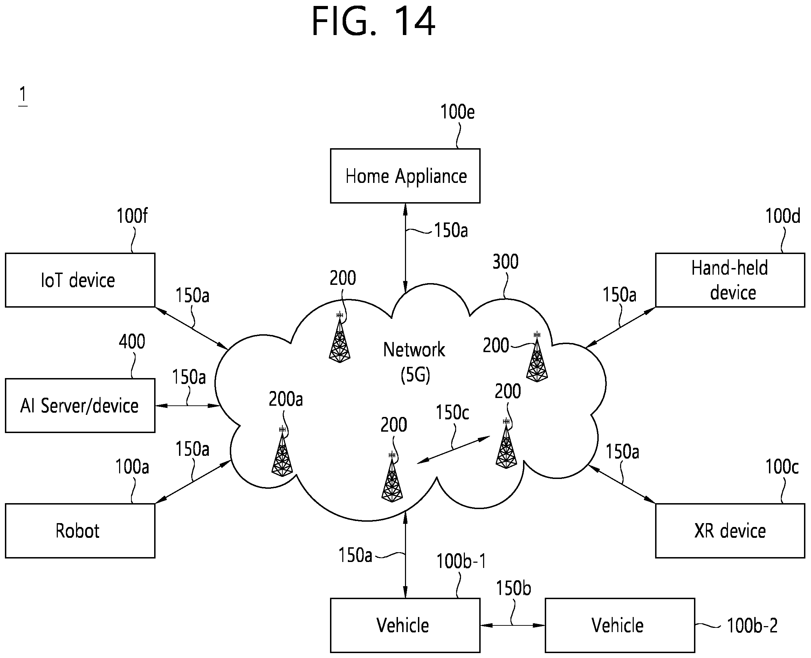

FIG. 14 shows a communication system 1, based on an embodiment of the present disclosure.

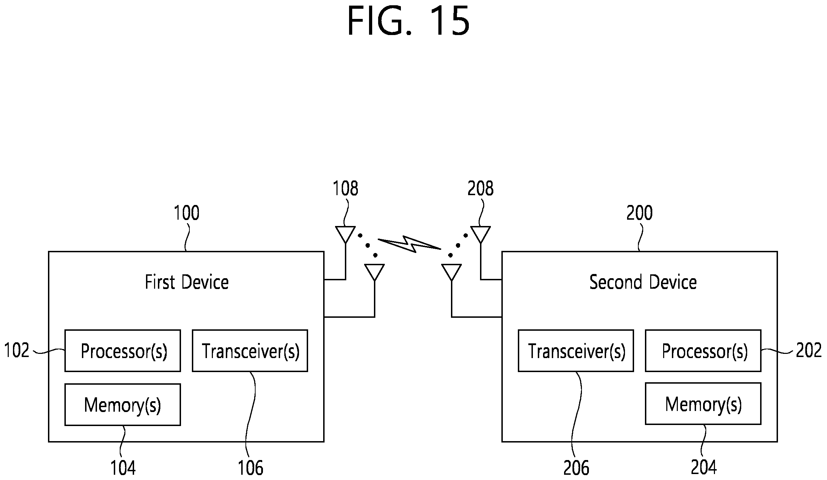

FIG. 15 shows wireless devices, based on an embodiment of the present disclosure.

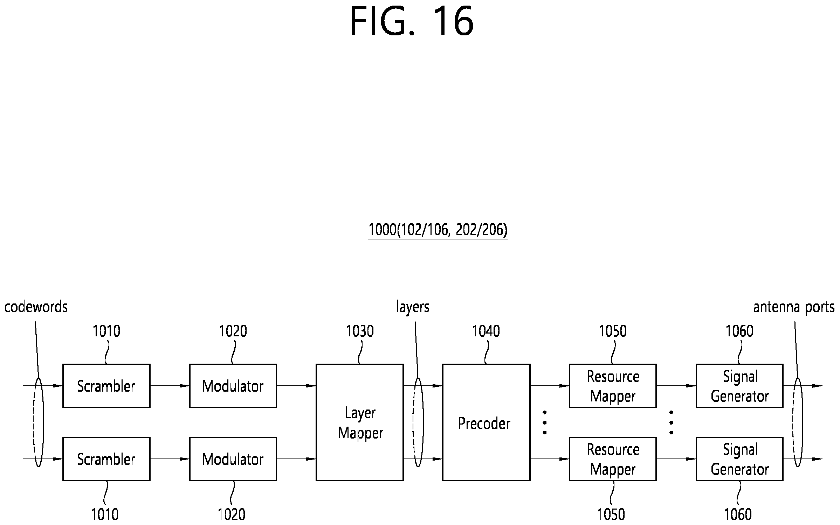

FIG. 16 shows a signal process circuit for a transmission signal, based on an embodiment of the present disclosure.

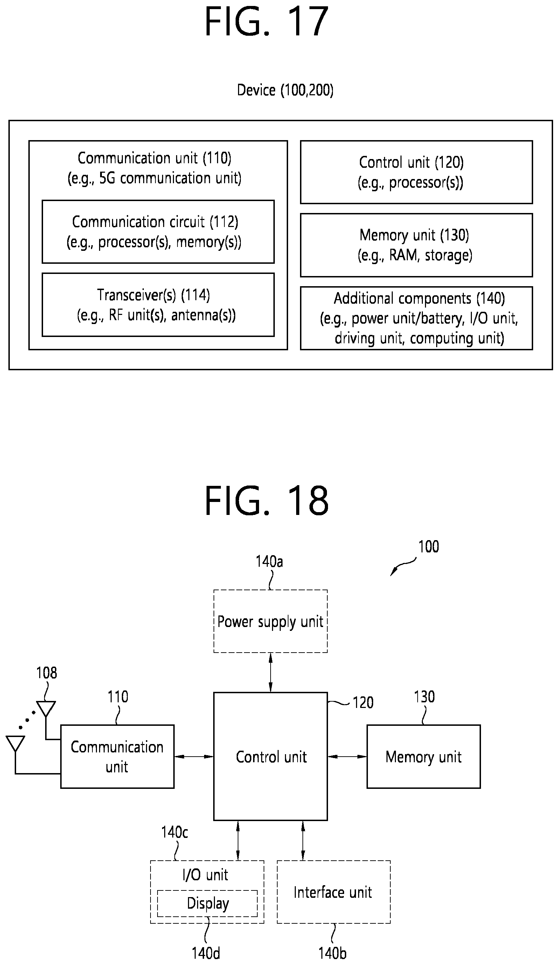

FIG. 17 shows another example of a wireless device, based on an embodiment of the present disclosure.
FIG. 18 shows a hand-held device, based on an embodiment of the present disclosure.
FIG. 19 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques not specifically described among terms and techniques used in this specification, a wireless communication standard document published before the present specification is filed may be referred to.

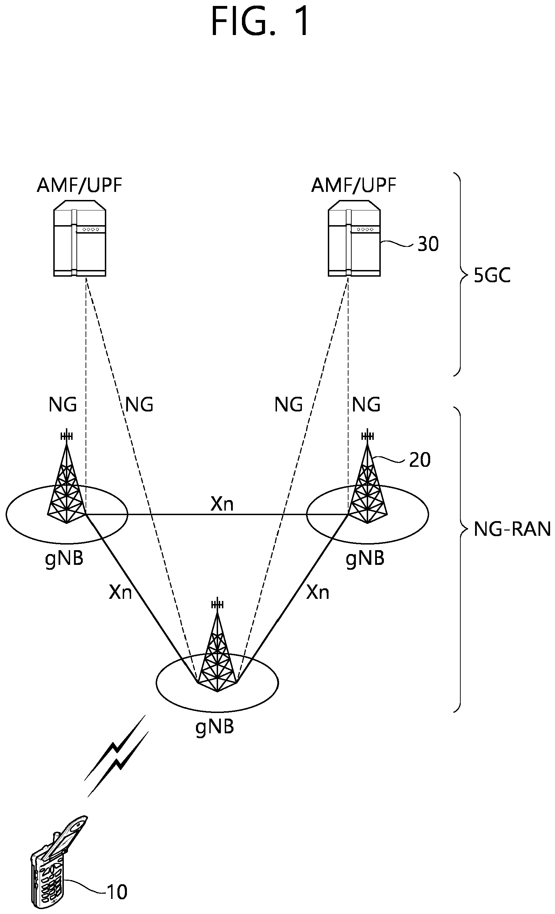

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

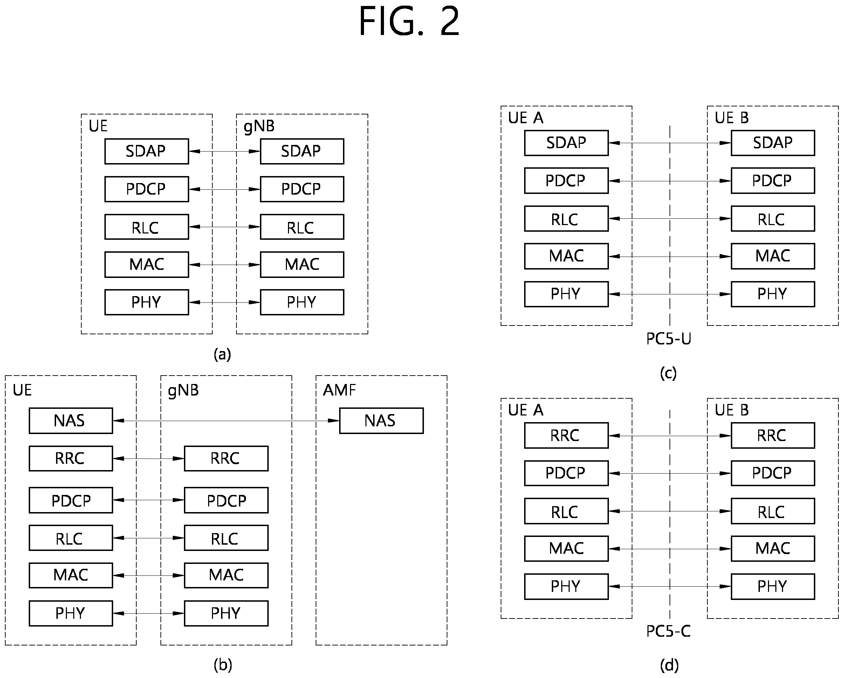

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

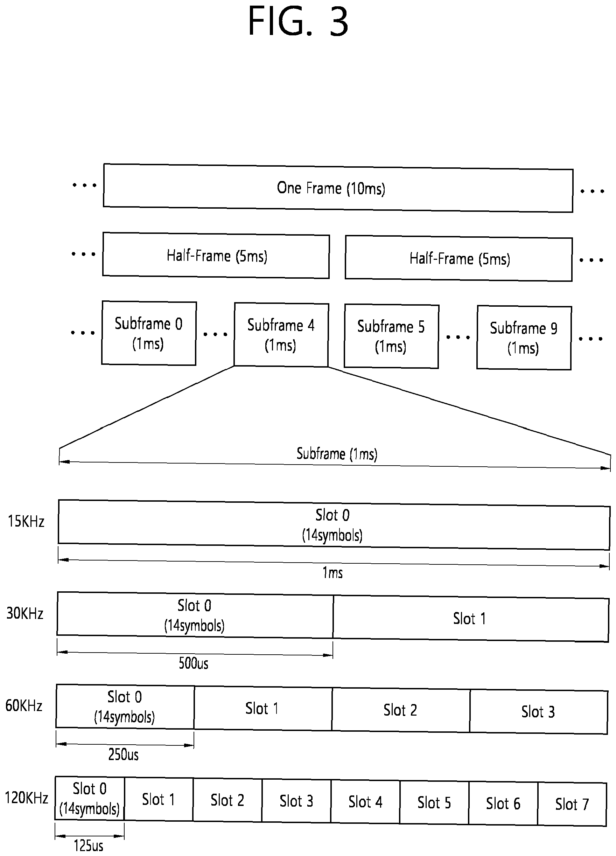

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

**Table 2**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

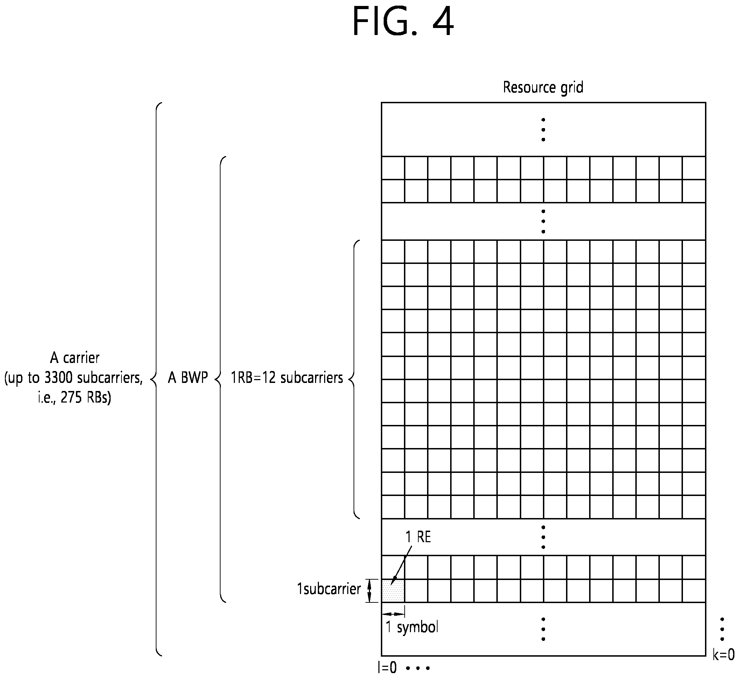

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

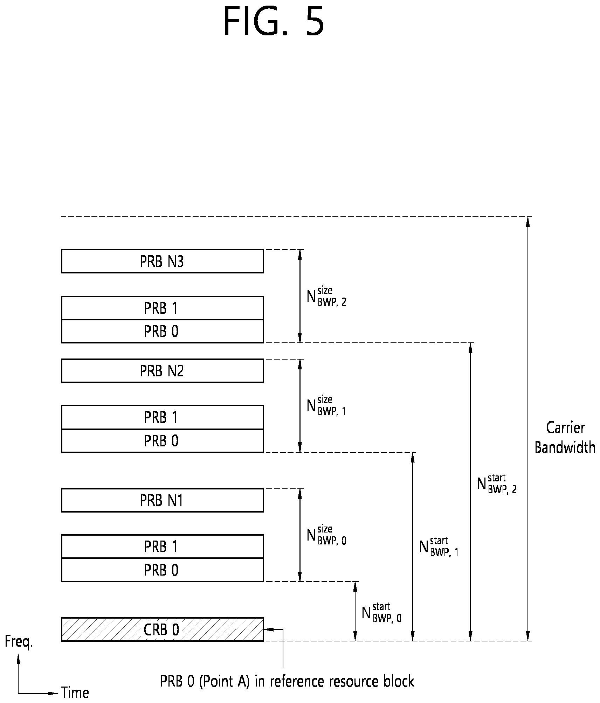

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

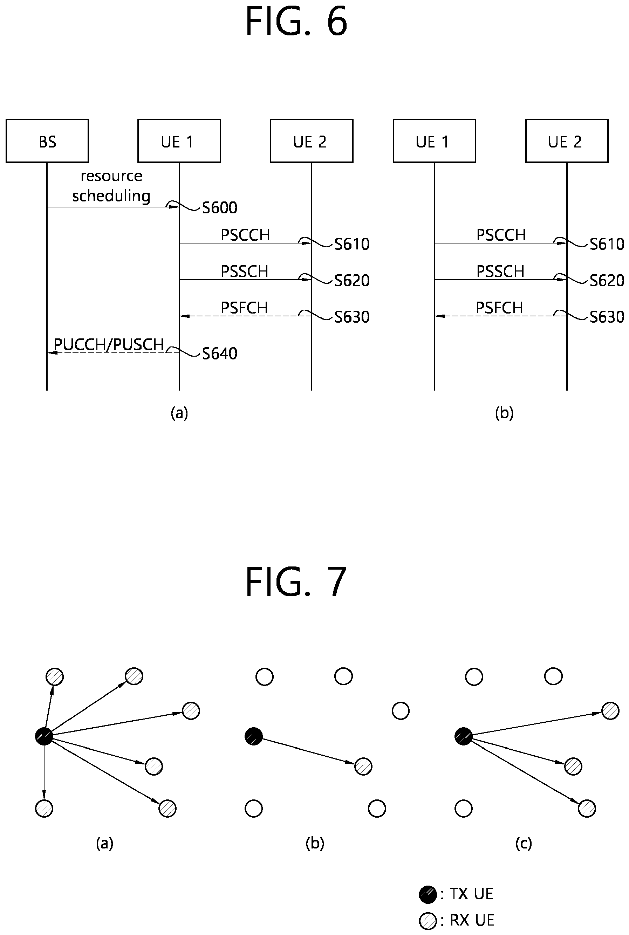

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI
- Resource pool index - ceiling (log₂ I) bits, where *I* is the number of resource pools for transmission configured by the higher layer parameter *sl-TxPoolScheduling.*
- Time gap - 3 bits determined by higher layer parameter *sl-DCI-ToSL-Trans*
- HARQ process number - 4 bits.
- New data indicator - 1 bit.
- Lowest index of the subchannel allocation to the initial transmission - ceiling (log₂(N^{SL}_{subChannel})) bits
- SCI format 1-A field: Frequency resource assignment, Time resource assignment
- PSFCH-to-HARQ feedback timing indicator - ceiling (log₂ N_{fb_timing}) bits, where *N*_{fb_timing} is the number of entries in the higher layer parameter sl-PSFCH-ToPUCCH,
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with *pdsch-HARQ-ACK-Codebook = dynamic,* 2 bits if the UE is configured with *pdsch-HARQACKCodebook = semi-static*
   - Padding bits, if required

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-Resource Reserve Period List, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**Table 6**

| Value of the Number of DMRS port field | Antenna ports |
|---|---|
| 0 | 1000 |
| 1 | 1000 and 1001 |

Hereinafter, an example of SCI format 2-A will be described. SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described. SCI format 2-B is used for the decoding of PSSCH, with HARQ operation when HARQ-ACK information includes only NACK, or when there is no feedback of HARQ-ACK information.

In HARQ operation, if the HARQ-ACK information contains only a NACK, or if there is no feedback from the HARQ-ACK information, SCI format 2-B is used to decode the PSSCH.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource. Referring to (a) of FIG. 6, in step S640, the first UE may transmit SL HARQ feedback to the base station through the PUCCH and/or the PUSCH.

Hereinafter, a UE procedure for reporting HARQ-ACK in the sidelink will be described.

A UE can be indicated by an SCI format scheduling a PSSCH reception, in one or more sub-channels from a number of N^{PSSCH}_{subch} sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot t'ₖ^{SL} (0 ≤ k < T'ₘₐₓ) has a PSFCH transmission occasion resource if k mod N^{PSFCH}_{PSSCH} = 0, where t'ₖ^{SL} is a slot that belongs to the resource pool, T'ₘₐₓ is a number of slots that belong to the resource pool within 10240 msec, and N^{PSFCH}_{PSSCH} is provided by sl-PSFCH-Period-r16. A UE may be indicated by higher layers to not transmit a PSFCH in response to a PSSCH reception. If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of M^{PSFCH}_{PRB,set} PRBs in a resource pool for PSFCH transmission in a PRB of the resource pool. For a number of N_{subch} sub-channels for the resource pool, provided by sl-NumSubchannel, and a number of PSSCH slots associated with a PSFCH slot that is less than or equal to N^{PSFCH}_{PSSCH}, the UE allocates the [(i+j·N^{PSFCH}_{PSSCH})·M^{PSFCH}_{subch,slot}, (i+1+j·N^{PSFCH}_{PSSCH})·M^{PSFCH}_{subch,slot}-1] PRBs from the M_{PRB,set}^{PSFCH} PRBs to slot i among the PSSCH slots associated with the PSFCH slot and sub-channel j, where M^{PSFCH}_{subch,slot} = M^{PSFCH}_{PRB},ₛₑₜ / (N_{subch}·N^{PSFCH}_{PSSCH}), 0 ≤ i < N^{PSFCH}_{PSSCH}, 0 ≤ j < N_{subch}, and the allocation starts in an ascending order of i and continues in an ascending order of j. The UE expects that M^{PSFCH}_{PRB,set} is a multiple of N_{subch}·N^{PSFCH}_{PSSCH}.

A UE determines a number of PSFCH resources available for multiplexing HARQ-ACK information in a PSFCH transmission as R^{PSFCH}_{PRB,CS} = N^{PSFCH}_{type}·M^{PSFCH}_{subch,slot}·N^{PSFCH}_{CS} where N^{PSFCH}_{CS} is a number of cyclic shift pairs for the resource pool and, based on an indication by higher layers,
- N^{PSFCH}_{type} = 1 and the M^{PSFCH}_{subch,slot} PRBs are associated with the starting sub-channel of the corresponding PSSCH
- N^{PSFCH}_{type} = N^{PSSCH}_{subch} and the N^{PSSCH}_{subch}·M^{PSFCH}_{subch,slot} PRBs are associated with one or more sub-channels from the N^{PSSCH}_{subch} sub-channels of the corresponding PSSCH

The PSFCH resources are first indexed according to an ascending order of the PRB index, from the N^{PSFCH}_{type}·M^{PSFCH}_{subch,slot} PRBs, and then according to an ascending order of the cyclic shift pair index from the N^{PSFCH}_{CS} cyclic shift pairs.

A UE determines an index of a PSFCH resource for a PSFCH transmission in response to a PSSCH reception as (P_{ID} + M_{ID}) mod R^{PSFCH}_{PRB,CS} where P_{ID} is a physical layer source ID provided by SCI format 2-A or 2-B scheduling the PSSCH reception, and M_{ID} is the identity of the UE receiving the PSSCH as indicated by higher layers if the UE detects a SCI format 2-A with Cast type indicator field value of "01"; otherwise, M_{ID} is zero.

A UE determines a m₀ value, for computing a value of cyclic shift α, from a cyclic shift pair index corresponding to a PSFCH resource index and from N^{PSFCH}_{CS} using Table 8.

**[Table 8]**

| N^{PSFCH}_{CS} | | m₀ | | | | | |
|---|---|---|---|---|---|---|---|
| | cyclic shift pair index 0 | | cyclic shift pair index 1 | cyclic shift pair index 2 | cyclic shift pair index 3 | cyclic shift pair index 4 | cyclic shift pair index 5 |
| 1 | 0 | | - | - | - | - | - |
| 2 | 0 | | 3 | - | - | - | - |
| 3 | 0 | | 2 | 4 | - | - | - |
| 6 | 0 | | 1 | 2 | 3 | 4 | 5 |

A UE determines a m_{cs} value, for computing a value of cyclic shift α, as in Table 9 if the UE detects a SCI format 2-A with Cast type indicator field value of "01" or "10", or as in Table 10 if the UE detects a SCI format 2-B or a SCI format 2-A with Cast type indicator field value of "11". The UE applies one cyclic shift from a cyclic shift pair to a sequence used for the PSFCH transmission.

**[Table 9]**

| HARQ-ACK Value | 0 (NACK) | 1 (ACK) |
|---|---|---|
| Sequence cyclic shift | 0 | 6 |

**Table 10]**

| HARQ-ACK Value | 0 (NACK) | 1 (ACK) |
|---|---|---|
| Sequence cyclic shift | 0 | N/A |

FIG. 7 shows three cast types, in accordance with an embodiment of the present disclosure. The embodiment of FIG. 7 may be combined with various embodiments of the present disclosure. Specifically, FIG. 7(a) shows broadcast-type SL communication, FIG. 7(b) shows unicast type-SL communication, and FIG. 7(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

For example, an SL DRX configuration may include one or more of the information listed below.

For example, *SL drx-onDurationTimer* may be information regarding the duration at the beginning of a DRX Cycle. For example, the duration at the beginning of a DRX Cycle may be information regarding the duration during which a UE is operating in active mode to transmit or receive sidelink data.

For example, *SL drx-SlotOffset* may be information regarding the delay before starting a *drx-onDurationTimer.*

For example, *SL drx-InactivityTimer* may be information regarding the duration after the PSCCH occasion in which a PSCCH indicates a new sidelink transmission and sidelink reception for the MAC entity. For example, if a transmitting UE is indicated to transmit of a PSSCH via a PSCCH, the transmitting UE may transmit the PSSCH to a receiving UE by operating in active mode while the *SL drx-InactivityTimer* is operating. Further, for example, if a receiving UE is indicated to transmit a PSSCH by the transmitting UE through the receipt of a PSCCH, the receiving UE may receive the PSSCH from the transmitting UE by operating in the active mode while the *SL drx-InactivityTimer* is operating.

For example, *SL drx-RetransmissionTimer* may be information regarding the maximum duration until a retransmission is received. For example, the *SL drx-RetransmissionTimer* may be configured per HARQ process.

For example, *SL drx-LongCydeStartOffset* may be information regarding the Long DRX cycle and *drx-StartOffset* which defines the subframe where the Long and Short DRX Cycle starts.

For example, *SL drx-ShortCycle* may be information regarding the Short DRX cycle. For example, *SL drx-ShortCycle* may be optional information.

For example, *SL drx-ShortCycleTimer* may be information regarding the duration the UE shall follow the Short DRX cycle. For example, *SL drx-ShortCycleTimer* may be optional information.

For example, *SL drx-HARQ-RTT-Timer* may be information regarding the minimum duration before an assignment for HARQ retransmission is expected by the MAC entity. For example, the *SL drx-HARQ-RTT-Timer* may be configured per HARQ process.

On the other hand, in NR V2X, discontinuous reception (DRX) behavior may be performed. For example, if the UE to be connected to Mode 1/Mode 2 performs SL DRX configuration, the issue of how to align the SL DRX with the Uu DRX may arise. In the context of this disclosure, aligning the Uu link DRX and SL DRX may mean that the on-duration is adjacent from a timing perspective, and the UE wakes up once to receive PDCCH/PSCCH or PSCCH/PDCCH. Here, for example, being adjacent may mean that the on-duration of the Uu link DRX and the SL DRX are located on the time axis within a predetermined time (t>=0). For example, being adjacent may include all or part of the on-duration of the Uu link DRX and the SL DRX overlapping each other.

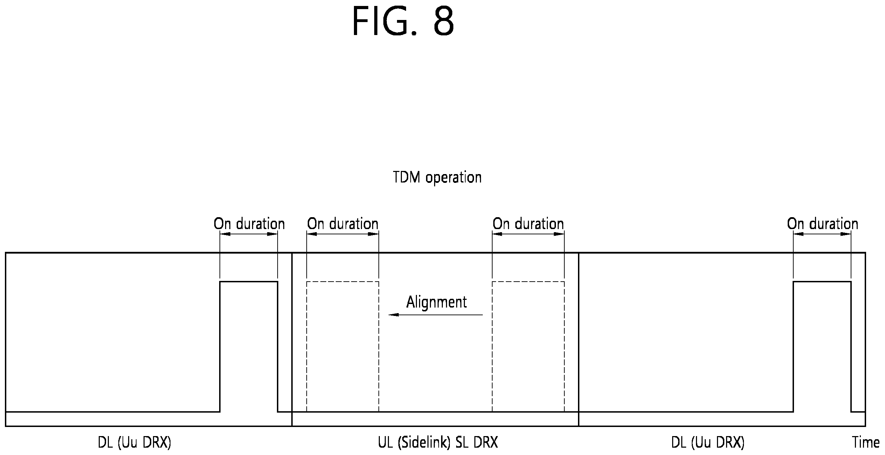

FIG. 8 shows an example of a method for aligning an SL DRX to a Uu DRX with respect to TDM, according to an embodiment of the present disclosure. The example of FIG. 8 may be combined with various embodiments of the present disclosure.

Referring to FIG. 8, the SL DRX and the Uu DRX can be aligned by moving the SL DRX from right to left. Similarly, for example, in the case of the Uu DRX, the SL DRX and the Uu DRX can be aligned by shifting the timing. For example, the Uu DRX may include a DRX for paging in the RRC CONNECTED state as well as a DRX for paging in the RRC IDLE state.

The present disclosure describes behaviors for a UE to maintain DRX alignment when resource reselection is triggered. Hereinafter, "when, if, in case of" may be replaced with "based on".

In this disclosure, a peer UE may be a UE that has a PC5 RRC connection/PC5-signaling setup for unicast communication. A peer UE may be a UE that is attempting to establish a PC5 RRC connection/PC5-signaling for unicast communication. A peer UE may be a UE that is in the process of setting up a PC5 RRC connection/PC5-signaling for unicast communication. For example, a UE may perform transmission/reception for sidelink (SL) data transmission, and a peer UE may perform transmission/reception. Thus, a UE may assign SL DRX configuration to a peer UE, and vice versa, a peer UE may assign SL DRX configuration to a UE. The behavior of a UE referred to in this disclosure may be applied to a peer UE. A transmitting UE (hereinafter referred to as TX UE) and receiving UE (hereinafter referred to as RX UE) referred to in this disclosure may apply to both a UE and a peer UE. Furthermore, all the behaviors and procedures described in this disclosure that a UE applies to a peer UE may be applied by a peer UE to a UE.

According to an embodiment of the present disclosure, a UE in the RRC_CONNECTED state may receive an SL DRX configuration from the network for alignment with the Uu DRX. For example, a UE may be a UE operating in mode 1 or a UE operating in mode 2.

For example, a peer UE may receive an SL DRX configuration from the network, or it may receive an SL DRX configuration from another UE. For example, a peer UE may be a UE with PC5 RRC association/PC5-signaling set up for unicast communication. For example, when an SL DRX configuration is transmitted to a peer UE, the SL DRX configuration may be categorized or indexed. For example, information related to the index/category may be included in the SL DRX configuration. For example, the SL DRX configured by the network may be configured to index 1 or category 1. For example, the SL DRX configured by a UE may be configured to index 2 or category 2.

For example, if a UE has performed resource reselection based on certain conditions, it may consider a number of things based on the currently configured SL DRX. For example, after the UE performs the reselection, the UE may consider if the selected resource (i.e., the resource to be transmitted by the UE) does not satisfy the packet delay budget (PDB) of the selected resource, considering the configured SL DRX reception pattern. Here, for example, the PDB may refer to an upper bound on the acceptable delay related to a packet. For example, if the PDB is satisfied, a UE may reuse the currently configured SL DRX configuration. Here, for example, reusing the currently configured SL DRX configuration may include using the currently configured SL DRX configuration without changing the currently configured SL DRX configuration. For example, after the UE performs resource reselection, it may determine whether the SL DRX reception pattern in which the selected resource is configured satisfies all or part of the selected resource's PDB. For example, if the PDB is satisfied, a UE may use the currently established SL DRX configuration after performing resource reselection, thereby reducing the delay caused by changing an SL DRX configuration.

For example, after a UE performs the reselection, the UE may consider whether the selected resource (i.e., the resource to be transmitted by the UE) is located within all or part of an inactive period, considering the established SL DRX reception pattern in which the selected resource is configured. For example, if it is not located within an inactive cycle, the UE may reuse the currently established SL DRX configuration. Here, for example, reusing the currently configured SL DRX configuration may include using the currently configured SL DRX configuration without changing the currently configured SL DRX configuration. For example, after the UE performs resource reselection, the UE may determine whether the SL DRX reception pattern in which the selected resource is configured is located within all or part of an inactive cycle. For example, if the resource reselected by the UE is located within an inactive cycle, the UE may continue to use the currently configured SL DRX configuration, thereby reducing the delay caused by changing an SL DRX configuration.

For example, the network may not know if a UE is performing SL DRX behavior based on an SL DRX configuration it has configured for the UE. For example, if a UE is unable to comply with the SL DRX configuration received from the network or a peer UE, the UE may inform the peer UE that resource reselection has been triggered and that it is currently unable to comply with the SL DRX configuration. For example, if a UE is unable to use an SL DRX configuration received from the network or from a peer UE, the UE may inform the peer UE of the triggering of resource reselection and that it can't use the SL DRX configuration. Thus, the network may re-configure the SL DRX configuration for the UE by determining that the UE can't use the currently configured SL DRX configuration.

For example, if a UE is unable to comply with the SL DRX configuration received from the network, the UE may inform the network via a peer UE that it is unable to comply with the SL DRX configuration. For example, if a UE is unable to use the SL DRX configuration received from the network, the UE may inform the network that it is unable to use the SL DRX configuration. For example, a UE (e.g., RX UE) may notify the network that it can't use the SL DRX configuration and perform a reconfiguration procedure for the SL DRX configuration.

For example, if a UE is unable to comply with an SL DRX configuration received from a peer UE, the UE may inform the peer UE that it is unable to comply with the SL DRX configuration. For example, if a UE is unable to use an SL DRX configuration received from a peer UE, the UE may inform the peer UE that it is unable to use the SL DRX configuration. For example, a UE may transmit an RRC reconfiguration failure message related to an SL DRX configuration. For example, an RRC reconfiguration failure message may be an RRCReconfigurationFailuresidelink message. In such cases, for example, the failure-type may be configured to configuration-failure. For example, a UE may transmit information of the resource to be transmitted after resource reselection (e.g., transmission period, number of transmissions, remaining buffer size, PC5 QoS indicator (PQI)) to a peer UE. Here, for example, PQI may be a specific 5QI that is used as a reference for PC5 QoS characteristics. For example, 5QI may be a parameter for referencing 5G QoS characteristics (i.e., parameters related to QoS flows).

According to an embodiment of the present disclosure, a UE that determines that it is unable to comply with an SL DRX configuration may adjust its reception period in consideration of received information related to the resource reselection. That is, for example, a peer UE may increase or decrease its reception time to enable SL reception. For example, a UE that determines that it cannot comply with an SL DRX configuration may adjust its reception period based on received information related to the resource reselection. For example, adjusting the reception period may include at least one of extending on-duration, adjusting a DRX cycle, adjusting an offset, or adjusting a parameter related to DRX.

For example, a UE that determines that it is unable to comply with an SL DRX configuration may perform a reconfiguration procedure for an SL DRX configuration that is appropriate for a peer UE, considering received information related to resource reselection. For example, a UE that determines that it is unable to comply with an SL DRX configuration may perform a reconfiguration procedure for an SL DRX configuration appropriate for a peer UE based on received information related to resource reselection.

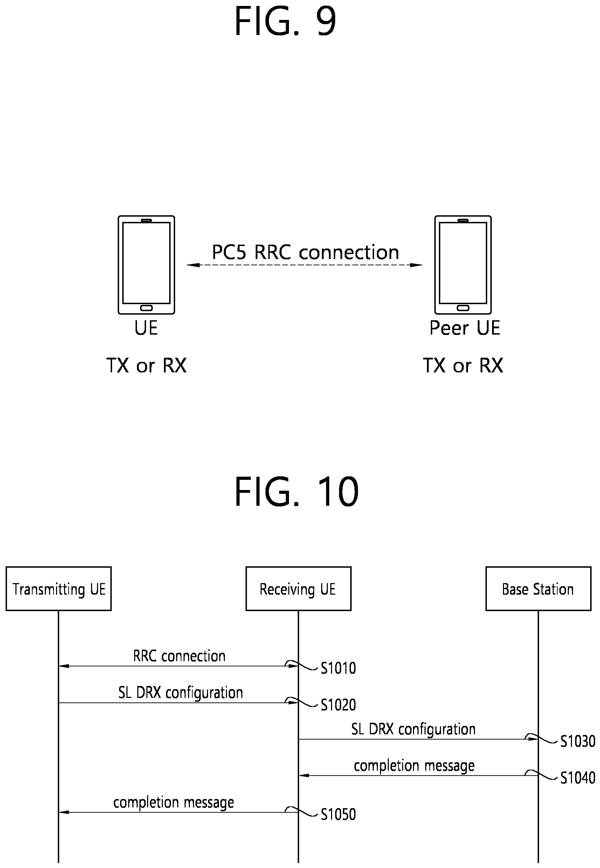

FIG. 9 shows an example of a UE and a peer UE, according to an embodiment of the present disclosure. The embodiment of FIG. 9 may be combined with various embodiments of the present disclosure.

In an embodiment of the present disclosure, a UE and a peer UE are connected, and the UE may be connected to the network in the RRC_CONNECTED state. For example, the UE may be a UE operating in mode 1. In such a case, for example, the UE may report SL DRX of the peer UE to the network, and the network may perform resource allocation considering an active time. For example, the network may perform resource allocation based on an received active time for the SL DRX. In the present disclosure, a UE may be a transmitting UE (hereinafter referred to as a TX UE) and a peer UE may be a receiving UE (hereinafter referred to as an RX UE). Further, for example, the peer UE may be a TX UE and the UE may be an RX UE, when the peer UE is in the RRC_CONNECTED state.

For example, the network may inform a UE of the configuration/change of an SL DRX configuration when the SL DRX configuration of the peer UE is configured/changed. For example, when an SL DRX configuration of a peer UE is configured/changed, the network may transmit the UE information related to configuration/change of the SL DRX configuration. As a result, the UE may be able to confirm that the SL DRX configuration of the peer UE have been configured/changed.

For example, if an SL DRX configuration of a peer UE changes, the network may not realize that the SL DRX configuration of the peer UE has changed and therefore may not be able to update the SL DRX configuration for the UE. For example, if a peer UE informs a UE of its SL DRX configuration, the UE may inform the network of the changed SL DRX of the peer UE. The network may then, for example, transmit a confirmation message to a UE for the changed SL DRX configuration. For example, when a peer UE transmits an SL DRX configuration to a UE, the UE may transmit information regarding the changed SL DRX of the peer UE to the network. For example, the network may transmit a completion message to a UE based on the information regarding the changed SL DRX of the peer UE. For example, a UE may receive the completion message from the network, and the UE may inform a peer UE of the completion message. For example, upon receiving such a completion message, the peer UE may change its SL DRX configuration. For example, prior to receiving such a completion message, a peer UE may not change its SL DRX configuration and may maintain its existing SL DRX configuration. Thus, the network may be able to determine the changed SL DRX of a peer UE via a UE and by the peer UE maintaining the existing SL DRX configuration until the peer UE receives the completion message, thereby allowing the network to smoothly perform alignment for SL DRX and Uu DRX.

According to an embodiment of the present disclosure, when a UE configures/changes an SL DRX configuration of a peer UE, the UE may immediately notify the network of the configuration/change of the SL DRX configuration of the peer UE. For example, when a UE configures/changes an SL DRX configurations of a peer UE, the UE may transmit to the network information related to the configuration/change of the SL DRX configuration of the peer UE.

For example, the network may receive the configured/changed SL DRX configuration from a UE and transmit a completion message for an SL DRX configuration to the UE. For example, a UE may receive the completion message from the network and transmit the configured/changed SL DRX configuration to a peer UE. For example, a peer UE may apply the configured/changed SL DRX configuration received from a UE. For example, a UE may maintain the existing SL DRX configuration until it receives the completion message. For example, a peer UE may maintain the existing SL DRX configuration until it receives the configured/changed SL DRX configuration.

According to an embodiment of the present disclosure, when the network configures/changes an SL DRX configuration of a peer UE, the network may, after configuring/changing an SL DRX configuration, inform the UE of the configured/changed SL DRX configuration.

For example, a UE may receive the configured/changed SL DRX configuration from the network, and the UE may inform a peer UE of the configured/changed SL DRX configuration. For example, a UE may confirm from a peer UE that the configured/changed SL DRX configuration is applicable, and the UE may notify the network that the configured/changed SL DRX configuration is applicable. For example, a peer UE may apply the received configured/changed SL DRX configuration.

For example, if a peer UE is unable to apply the received configured/changed SL DRX configuration, a UE may inform the network that it is unable to apply the configured/changed SL DRX configuration. In such cases, a UE and a peer UE may maintain the existing SL DRX configuration.

According to an embodiment of the present disclosure, when the network configures/changes an SL DRX configuration, the network may notify a UE after configuring/changing the SL DRX configuration. For example, a UE may notify the network that it can apply the configured/changed SL DRX configuration if the received configured/changed SL DRX configuration is applicable. For example, a UE may apply the received configured/changed SL DRX configuration.

For example, if a UE is unable to apply the received configured/changed SL DRX configuration, it may inform the network that it is unable to apply the received configured/changed SL DRX configuration. For example, the UE may maintain the existing SL DRX configuration.

In other embodiments of the present disclosure, a UE may transmit SL data and a peer UE may receive SL data. For example, a UE may wish to configure an SL DRX configuration to a peer UE. In such cases, for example, a UE may configure an SL DRX configuration to a peer UE, and the UE may perform a sidelink RRC reconfiguration procedure to the peer UE. In such cases, for example, a UE may transmit a message requesting auxiliary information for SL DRX configuration. For example, after transmitting the message requesting the auxiliary information, the UE may remain active state to receive a response to the message. For example, a UE may operate a timer considering a case where a peer UE is in the RRC_CONNECTED state and considering the time to perform a Uu DRX alignment with the serving network of the peer UE. For example, a UE may operate a timer based on the RRC_CONNECTED state of a peer UE and the time to perform Uu DRX alignment with the serving base station of the peer UE. Here, for example, auxiliary information may be information that a UE references for configuring the SL DRX configuration. For example, if a UE has requested ancillary information from a peer UE, the ancillary information may include at least one of information regarding a preferred SL DRX configuration of the peer UE, information regarding a recommended SL DRX configuration for the UE, or traffic information of the peer UE. For example, the traffic information may include at least one of the following: traffic generation pattern/period, slot/timing offset, traffic size, traffic generation form (e.g., periodic, aperiodic), prioritization information or requirements related to the traffic (e.g., target error rate, (remaining) latency budget).

For example, after transmitting a request message for ancillary information, a UE may trigger a prohibit timer. For example, during the operation of the prohibit timer, a UE may not transmit a request message for additional ancillary information to a peer UE. For example, after the prohibit timer expires, a UE may transmit a request message for additional ancillary information to a peer UE. For example, while the prohibit timer is running, a UE may not transmit a sidelink RRC reconfiguration message to a peer UE for further SL DRX configurationa. For example, after the prohibit timer expires, a UE may transmit a sidelink RRC reconfiguration message to a peer UE for additional SL DRX configuration. For example, while the prohibit timer is running, a peer UE may not transmit any additional ancillary information to a UE. For example, after the prohibit timer expires, a peer UE may transmit additional ancillary information to a UE. Thus, during the operation of the prohibit timer, a UE may guarantee time for a peer UE to perform alignment with the peer UE's serving network for SL DRX and Uu DRX by not requesting an additional RRC reconfiguration message or ancillary information from the peer UE.

For example, a UE may start a prohibit timer after transmitting an SL DRX configuration through the sidelink RRC reconfiguration procedure. For example, while the prohibit timer is running, a UE may not transmit a request message for additional ancillary information to a peer UE. For example, after the prohibit timer expires, a UE may transmit a request message for additional ancillary information to a peer UE. For example, while the prohibit timer is running, a UE may not transmit a sidelink RRC reconfiguration message to a peer UE for an additional SL DRX configuration. For example, after the prohibit timer expires, a UE may transmit a sidelink RRC reconfiguration message to a peer UE for additional SL DRX configuration. For example, while the prohibit timer is running, a peer UE may not transmit any additional ancillary information to a UE. For example, after the prohibit timer expires, a peer UE may transmit additional ancillary information to a UE. Thus, during the operation of the prohibit timer, a UE may guarantee time for a peer UE to perform alignment with the peer UE's serving network for SL DRX and Uu DRX by not requesting an additional RRC reconfiguration message or ancillary information from the peer UE.

For example, if a peer UE has an SL DRX configuration configured by a UE, the peer UE may transmit the received SL DRX configuration to a base station or network for alignment with the serving base station or network. For example, a base station or network may align the Uu DRX with the received SL DRX configuration, and then notify a peer UE that the alignment is complete via a completion message. For example, until receiving the completion message, a peer UE may not transmit the auxiliary information to a UE, despite receiving a message from the UE requesting the auxiliary information. For example, until receiving the completion message, a peer UE may not perform a response to a sidelink RRC reconfiguration message, despite receiving a sidelink RRC reconfiguration message from a UE that includes an SL DRX configuration. For example, before receiving the completion message, if a peer UE receives a sidelink RRC reconfiguration message from a UE that includes an SL DRX configuration, the peer UE may transmit a reject message to the UE for the sidelink RRC reconfiguration message. Therefore, until receiving the completion message, a peer UE may guarantee time for a peer UE to perform alignment for SL DRX and Uu DRX with the peer UE's serving network by not responding to an additional RRC reconfiguration message or a request for ancillary information.

For example, if a peer UE receives an SL DRX configuration from a UE, the peer UE may transmit an SL DRX configuration received from the UE to a base station or network for DRX alignment with the serving base station or network. For example, if a peer UE has received an SL DRX configuration from a UE, the peer UE may transmit the SL DRX configuration received from the UE to a base station or network via sidelink UE information (SUI) for DRX alignment with the serving base station or network. For example, a base station or network may align the Uu DRX with the received SL DRX configuration, and then transmit a completion message to a peer UE. For example, until receiving a completion message from a base station or network, a peer UE may not transmit ancillary information to a UE, despite receiving a message from the UE requesting ancillary information. For example, until receiving a completion message from a base station or network, a peer UE may not perform a response to a sidelink RRC reconfiguration message despite receiving a sidelink RRC reconfiguration message from a UE, that includes an SL DRX configuration. For example, if, prior to receiving a completion message from a base station or network, a peer UE receives a sidelink RRC reconfiguration message from a UE that includes an SL DRX configuration, the peer UE may transmit a reject message to the UE for the sidelink RRC reconfiguration message. Therefore, until receiving a completion message, a peer UE may guarantee time for a peer UE to perform alignment for SL DRX and Uu DRX with the peer UE's serving network by not responding to an additional RRC reconfiguration message or a request for ancillary information.

For example, after a peer UE receives a completion message from a base station or network indicating alignment with Uu DRX, the peer UE may deliver the completion message to a UE. For example, after receiving a completion message from a peer UE, a UE may transmit a request message for ancillary information to the peer UE. For example, after receiving a completion message from the peer UE, a UE may transmit a sidelink RRC reconfiguration message to the peer UE that includes an SL DRX configuration.

According to various embodiments of the present disclosure, while a peer UE is aligning SL DRX with a serving base station or network of the peer UE, the alignment of SL DRX and Uu DRX through the network of a TX UE and an RX UE may be performed efficiently by not performing a transmission of an additional SL DRX configuration to the peer UE.

In various embodiments of the present disclosure, the SL DRX timers mentioned below may be used for the following purposes.

For example, an SL DRX on-duration timer may be used in intervals where a UE performing SL DRX operation needs to operate with a default active time to receive PSCCH/PSSCH from another UE.

For example, an SL DRX inactivity timer may be used in an interval to extend an SL DRX endurance interval, which is an interval during which a UE performing SL DRX operation must operate as active time by default to receive PSCCH/PSSCH from another UE, i.e., for example, it may extend the SL DRX endurance timer by the SL DRX inactivity timer interval. In addition, when a UE receives a new packet (e.g., a new PSSCH) from another UE, it may start an SL DRX inactivity timer to extend an SL DRX endurance timer.

For example, an SL DRX HARQ RTT timer may be used in intervals where a UE performing SL DRX operation is operating in sleep mode until it receives a retransmission packet (or PSSCH assignment) from another UE. That is, for example, when a UE may start an SL DRX HARQ RTT timer, it may determine that the counterpart UE will not transmit a sidelink retransmission packet to it until the SL DRX HARQ RTT timer expires, and the UE may operate in sleep mode during that timer.

For example, an SL DRX retransmission timer may be used during an interval when a UE performing SL DRX operation is operating as active time to receive retransmission packets (or PSSCH assignments) transmitted by the counterpart UE. For example, during the SL DRX retransmission timer interval, the UE may monitor the reception of retransmission sidelink packets (or PSSCH assignments) transmitted by the counterpart UE.

Various embodiments of the present disclosure may address the problem of loss due to interruptions that occur during Uu BWP switching.

Further, for example, various embodiments of the present disclosure may address the problem of loss due to interruptions that occur during SL BWP switching when a UE supports SL multiple bandwidth parts (BWPs).

Various embodiments of the present disclosure may be applied to a UE-Pair Specific SL DRX configuration, a UE-Pair Specific SL DRX pattern, parameters included in a UE-Pair Specific SL DRX configuration, and timers included in a UE-Pair Specific SL DRX configuration, not just for a Default/Common SL DRX configuration, a Default/Common SL DRX pattern, parameters included in a Default/Common SL DRX configuration, or timers included in a Default/Common SL DRX configuration.

Also, in the present disclosure, for example, an "On-duration" may be an interval of Active Time (an interval during which an RF module is operating in a wake up state (i.e., "on") to receive/transmit radio signals). For example, an "Off-duration" may be a Sleep Time interval (an interval during which an RF module operates in a sleep mode state (the RF module is "off") to save power. A sleep time interval may not imply that a transmitting UE is obligated to operate in sleep mode during the sleep time interval. A UE may be permitted to operate as active time for a short period of time for sensing operations/transmission operations, if required, even during sleep time). Further, for example, whether the various embodiments of the present disclosure are applied may be configured differently or independently according to a resource pool, congestion level, service priority, service type, QoS requirement (e.g., latency, reliability), PQI, traffic type (e.g., periodic generation, aperiodic generation), or SL transmission resource allocation mode (mode 1, mode 2). For example, parameters (e.g., thresholds) related to various embodiments of the present disclosure may be configured differently or independently according to a resource pool, a congestion level, a service priority, a service type, a QoS requirement (e.g., latency, reliability), a PQI, a traffic type (e.g., periodic generation, aperiodic generation), or an SL transmission resource allocation mode (e.g., mode 1, mode 2).

For example, whether the various embodiments of the present disclosure are applied may be configured independently or differently for at least one of a resource pool (e.g., PSFCH-enabled resource pool, non-PSFCH-enabled resource pool), service/packet type, priority, QoS requirements (e.g., URLLC/EMBB traffic, reliability, latency), PQI, PC5 QoS Flow Identifier (PFI), cast type (e.g., unicast, groupcast, broadcast), congestion level (e.g., channel busy ratio (CBR)), resource pool congestion level, SL HARQ feedback method (e.g., feedback NACK only, feedback ACK/NACK), MAC PDU transmission with HARQ feedback enabled, MAC PDU transmission with HARQ feedback disabled, whether to enable PUCCH-based SL HARQ feedback reporting operation, whether to perform pre-emption, and whether to perform re-evaluation, pre-emption-based resource reselection, re-evaluation-based resource reselection, L1 source identifier, L1 destination identifier, L2 source identifier, L2 destination identifier, combination identifier of L1 source layer ID and L1 destination layer ID, combination identifier of L2 source layer ID and L2 destination layer ID, combination identifier of pair of L1 source layer ID and L1 destination layer ID and cast type, combination identifier of pair of L2 source layer ID and L2 destination layer ID and cast type, PC5 RRC connection/link, whether SL DRX is performed, whether SL DRX is supported, SL mode type (resource allocation mode 1, resource allocation mode 2), reservation operation of periodic resources or reservation operation of aperiodic resources. Here, for example, PFI may mean an identifier for a PC5 QoS flow.

For example, parameter configuration values related to various embodiments of the present disclosure may be configured independently or differently for at least one of a resource pool (e.g., PSFCH-enabled resource pool, non-PSFCH-enabled resource pool), service/packet type, priority, QoS requirements (e.g., URLLC/EMBB traffic, reliability, latency), PQI, PFI, cast type (e.g., unicast, groupcast, broadcast), congestion level (e.g., CBR), resource pool congestion level, SL HARQ feedback method (e.g., feedback NACK only, feedback ACK/NACK), MAC PDU transmission with HARQ feedback enabled, MAC PDU transmission with HARQ feedback disabled, whether to enable PUCCH-based SL HARQ feedback reporting operation, whether to perform pre-emption, and whether to perform re-evaluation, pre-emption-based resource reselection, re-evaluation-based resource reselection, L1 source identifier, L1 destination identifier, L2 source identifier, L2 destination identifier, combination identifier of L1 source layer ID and L1 destination layer ID, combination identifier of L2 source layer ID and L2 destination layer ID, combination identifier of pair of L1 source layer ID and L1 destination layer ID and cast type, combination identifier of pair of L2 source layer ID and L2 destination layer ID and cast type, PC5 RRC connection/link, whether SL DRX is performed, whether SL DRX is supported, SL mode type (resource allocation mode 1, resource allocation mode 2), reservation operation of periodic resources or reservation operation of aperiodic resources.

In the present disclosure, for example, a "certain time" may be a period of time during which a UE operates as an Active Time for a predefined amount of time to receive sidelink signaling or sidelink data from another UE. For example, a "certain time" may be a period of time during which a UE operates as active time for a timer (SL DRX retransmission timer, SL DRX inactivity timer, timer that ensures that an RX UE operates as active time in DRX operation) time to receive sidelink signaling or sidelink data from another UE.

Various embodiments of the present disclosure may be applied to millimeter wave (mmWave) SL operation. Whether the various embodiments of the present disclosure are applied may be applied to millimeter wave (mmWave) SL operation. The parameter configuration values related to the various embodiments of the present disclosure may be applied to millimeter wave (mmWave) SL operation.

FIG. 10 shows a procedure for a receiving UE to receive a completion message for SL DRX configuration from a base station, according to an embodiment of the present disclosure. The embodiment of FIG. 10 may be combined with various embodiments of the present disclosure.

Referring to FIG. 10, in step S1010, a receiving UE may establish a radio resource control (RRC) connection with a transmitting UE. In step S1020, a receiving UE may receive a discontinuous reception (SL DRX) configuration from a transmitting UE. In step S1030, the receiving UE may transmit the SL DRX configuration to a base station. In step S1040, a receiving UE may receive a completion message for the SL DRX configuration from the base station. In step S1050, a receiving UE may transmit a completion message to a transmitting UE. For example, the transmission of ancillary information may not be allowed until the completion message is received by a receiving UE from the base station.

For example, a receiving UE may receive a message from a transmitting UE requesting ancillary information. For example, based on a receiving UE receiving the completion message, a receiving UE may transmit ancillary information to a transmitting UE.

For example, a receiving UE may transmit a completion message to a transmitting UE. For example, a transmitting UE may transmit, to a receiving UE, a message requesting auxiliary information based on the completion message.

For example, a timer for the transmitting UE may be started, based on the transmitting UE transmitting the message requesting the assistance information. For example, a transmission for a message requesting additional assistance information may be prohibited for a transmitting UE, while the timer is running. For example, a transmitting UE may transmit, to a receiving UE, a message requesting additional assistance information, after the timer expires.

For example, the SL DRX configuration may include information related to an SL DRX cycle and information related to an active time. For example, the active time for a second device 200 may be maintained, based on a transmitting UE transmitting the SL DRX configuration to a receiving UE.

For example, a timer for a transmitting UE may be started, based on the transmitting UE transmitting the SL DRX configuration to a receiving UE. For example, a transmission for an RRC reconfiguration message may be prohibited for a transmitting UE, while the timer is running. For example, a transmitting UE may transmit, to a receiving UE, an RRC reconfiguration message, after the timer expires.

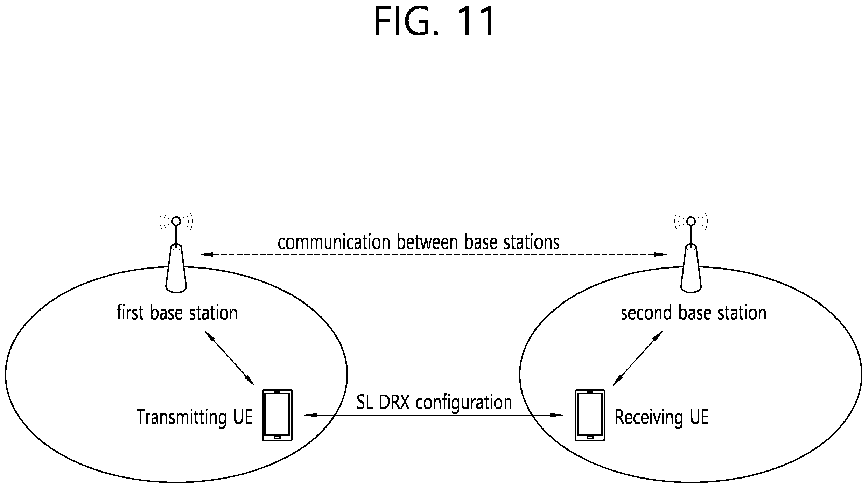

FIG. 11 shows an example of a receiving UE receiving a completion message for SL DRX configuration from a base station, according to an embodiment of the present disclosure. The example of FIG. 11 may be combined with various embodiments of the present disclosure.

Referring to FIG. 11, after a transmitting UE and a receiving UE establish an RRC connection, the receiving UE may receive an SL DRX configuration from the transmitting UE. In this case, a serving base station of a transmitting UE may be a first base station and a serving base station of a receiving UE may be a second base station. For example, based on a receiving UE receiving an SL DRX configuration, the receiving UE may transmit the SL DRX configuration to the second base station. For example, the second base station may align a DRX (e.g., a Uu DRX) related to the second base station based on the SL DRX configuration. For example, after a second base station completes aligning the SL DRX for a receiving UE and the Uu DRX for the receiving UE, the second base station may transmit a completion message to the receiving UE.

For example, a receiving UE may not transmit ancillary information to a transmitting UE, despite receiving a message from the transmitting UE requesting ancillary information, until it receives a completion message from a second base station. For example, a receiving UE may not perform a response to a sidelink RRC reconfiguration message to the transmitting UE, despite receiving a sidelink RRC reconfiguration message from the transmitting UE that includes an SL DRX configuration, until receiving a completion message from the second base station. For example, if a receiving UE receives a sidelink RRC reconfiguration message from the transmitting UE that includes the SL DRX configuration before the receiving UE receives a completion message from the second base station, the receiving UE may transmit a reject message to the transmitting UE for the sidelink RRC reconfiguration message.

For example, after a receiving UE receives a completion message from a second base station, the receiving UE may transmit auxiliary information to a transmitting UE. For example, after a receiving UE receives a completion message from a second base station, the receiving UE may transmit the completion message to the transmitting UE.

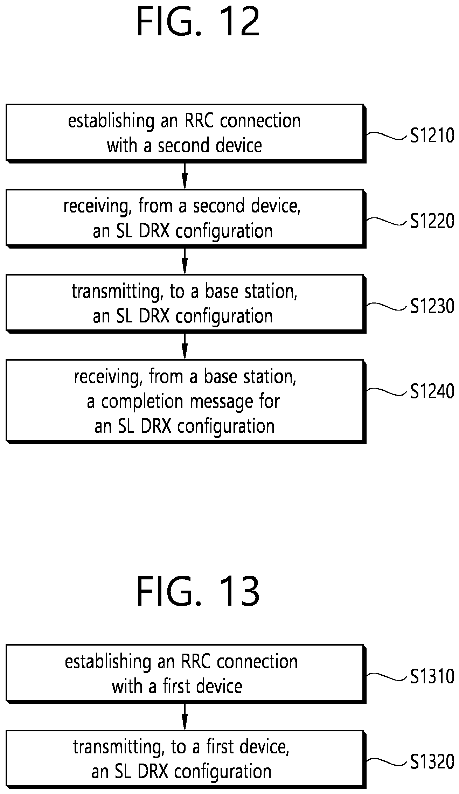

FIG. 12 shows a method for a first device to receive, from a base station, a completion message for an SL DRX configuration, according to an embodiment of the present disclosure. The embodiment of FIG. 12 may be combined with various embodiments of the present disclosure.

Referring to FIG. 12, in step S1210, a first device 100 may establish a radio resource control, RRC, connection with a second device 200. In step S1220, a first device 100 may receive, from a second device 200, an SL discontinuous reception, DRX, configuration. In step S1230, a first device 100 may transmit, to a base station, the SL DRX configuration. In step S1240, a first device 100 may receive, from the base station, a completion message for the SL DRX configuration. For example, a transmission of an assistance information may be not allowed before a first device 100 receiving the completion message.

For example, a first device 100 may receive, from a second device 200, a message requesting the assistance information. For example, a first device 100 may transmit, to a second device 200, the assistance information, based on the first device receiving a completion message.

For example, a first device 100 may transmit, to a second device 200, the completion message. For example, a second device 200 may transmit, to a first device 100, a message requesting the assistance information, based on a completion message.

For example, a timer for a second device 200 may be started, based on the second device 200 transmitting the message requesting the assistance information. For example, a transmission for a message requesting additional assistance information may be prohibited for a second device 200, while the timer is running. For example, a second device 200 may transmit, to a first device 100, a message requesting additional assistance information, after the timer expires.

For example, the SL DRX configuration may include information related to an SL DRX cycle and information related to an active time. For example, the active time for a second device 200 may be maintained, based on the second device 200 transmitting the SL DRX configuration to a first device 100.

For example, a timer for a second device 200 may be started, based on the second device 200 transmitting the SL DRX configuration to a first device 100. For example, a transmission for an RRC reconfiguration message may be prohibited for a second device 200, while the timer is running. For example, a second device 200 may transmit, to a receiving UE, an RRC reconfiguration message, after the timer expires.

The embodiments described above may be applied to a various devices described below. For example, a processor 102 of a first device 100 may control a transceiver 106 to establish a radio resource control, RRC, connection with a second device 200. And, for example, a processor 102 of a first device 100 may control a transceiver 106 to receive, from a second device 200, an SL discontinuous reception, DRX, configuration. And, for example, a processor 102 of a first device 100 may control a transceiver 106 to transmit, to a base station, the SL DRX configuration. And, for example, a processor 102 of a first device 100 may control a transceiver 106 to receive, from the base station, a completion message for the SL DRX configuration.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: establish a radio resource control, RRC, connection with a second device; receive, from the second device, an SL discontinuous reception, DRX, configuration; transmit, to a base station, the SL DRX configuration; and receive, from the base station, a completion message for the SL DRX configuration. For example, a transmission of an assistance information may be not allowed before the first device receiving the completion message.

According to an embodiment of the present disclosure, a device adapted to control a first user equipment, UE, may be proposed. For example, the device may comprise: one or more processors; and one or more memories operably connectable to the one or more processors and storing instructions. For example, the one or more processors may execute the instructions to: establish a radio resource control, RRC, connection with a second UE; receive, from the second UE, an SL discontinuous reception, DRX, configuration; transmit, to a base station, the SL DRX configuration; and receive, from the base station, a completion message for the SL DRX configuration. For example, a transmission of an assistance information may be not allowed before the first UE receiving the completion message.

According to an embodiment of the present disclosure, a non-transitory computer-readable storage medium storing instructions may be proposed. For example, the instructions, when executed, may cause a first device to: establish a radio resource control, RRC, connection with a second device; receive, from the second device, an SL discontinuous reception, DRX, configuration; transmit, to a base station, the SL DRX configuration; and receive, from the base station, a completion message for the SL DRX configuration. For example, a transmission of an assistance information may be not allowed before the first device receiving the completion message.

FIG. 13 shows a method for a second device to transmit, to a first device, SL DRX configuration, according to an embodiment of the present disclosure. The embodiment of FIG. 13 may be combined with various embodiments of the present disclosure.

Referring to FIG. 13, in step S1310, a second device 200 may establish a radio resource control, RRC, connection with a first device 100. In step S1320, a second device 200 may transmit, to a first device 100, an SL discontinuous reception, DRX, configuration. For example, a transmission of an assistance information may be not allowed before a first device 100 receiving a completion message from a base station. For example, a request of assistance information for the first device 100 may be not allowed to a second device 200 before receiving a completion message for the SL DRX configuration from the first device 100.

For example, a second device 200 may transmit, from a first device 100, a message requesting assistance information. For example, a second device 200 may receive, from a first device 100, assistance information, based on a first device 100 receiving a completion message.

For example, a second device 200 may receive, from a first device 100, a completion message. For example, a second device 200 may transmit, to a first device 100, a message requesting the assistance information, based on a completion message.

For example, a timer for a second device 200 may be started, based on the second device 200 transmitting the message requesting the assistance information. For example, a transmission for a message requesting additional assistance information may be prohibited for a second device 200, while the timer is running. For example, a second device 200 may transmit, to a first device 100, a message requesting additional assistance information, after the timer expires.

For example, the SL DRX configuration may include information related to an SL DRX cycle and information related to an active time. For example, the active time for a second device 200 may be maintained, based on the second device 200 transmitting the SL DRX configuration to a first device 100.

For example, a timer for a second device 200 may be started, based on the second device 200 transmitting the SL DRX configuration to a first device 100. For example, a transmission for an RRC reconfiguration message may be prohibited for a second device 200, while the timer is running. For example, a second device 200 may transmit, to a receiving UE, an RRC reconfiguration message, after the timer expires.

The embodiments described above may be applied to a various devices described below. For example, a processor 202 of a second device 200 may control a transceiver 206 to establish a radio resource control, RRC, connection with a first device 100. And, for example, a processor 202 of a second device 200 may control a transceiver 206 to transmit, to a first device 100, an SL discontinuous reception, DRX, configuration.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: establish a radio resource control, RRC, connection with a first device; and transmit, to the first device, an SL discontinuous reception, DRX, configuration. For example, a request of assistance information for the first device may be not allowed before receiving a completion message for the SL DRX configuration from the first device.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

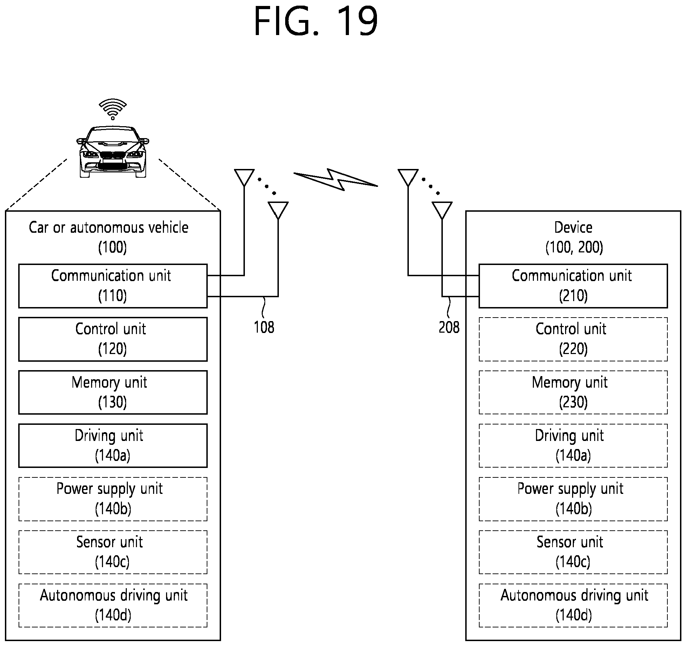

FIG. 19 shows a communication system 1, based on an embodiment of the present disclosure. The embodiment of FIG. 19 may be combined with various embodiments of the present disclosure.

Referring to FIG. 19, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 19 shows wireless devices, based on an embodiment of the present disclosure. The embodiment of FIG. 19 may be combined with various embodiments of the present disclosure.

Referring to FIG. 19, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 19.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 20 shows a signal process circuit for a transmission signal, based on an embodiment of the present disclosure. The embodiment of FIG. 20 may be combined with various embodiments of the present disclosure.

Referring to FIG. 20, a signal processing circuit 1000 may include scramblers 1010, modulators 1020, a layer mapper 1030, a precoder 1040, resource mappers 1050, and signal generators 1060. An operation/function of FIG. 20 may be performed, without being limited to, the processors 102 and 202 and/or the transceivers 106 and 206 of FIG. 19. Hardware elements of FIG. 20 may be implemented by the processors 102 and 202 and/or the transceivers 106 and 206 of FIG. 19. For example, blocks 1010 to 1060 may be implemented by the processors 102 and 202 of FIG. 19. Alternatively, the blocks 1010 to 1050 may be implemented by the processors 102 and 202 of FIG. 19 and the block 1060 may be implemented by the transceivers 106 and 206 of FIG. 19.

Codewords may be converted into radio signals via the signal processing circuit 1000 of FIG. 20. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 20. For example, the wireless devices (e.g., 100 and 200 of FIG. 19) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

FIG. 21 shows another example of a wireless device, based on an embodiment of the present disclosure. The wireless device may be implemented in various forms according to a use-case/service (refer to FIG. 19). The embodiment of FIG. 21 may be combined with various embodiments of the present disclosure.

Referring to FIG. 21, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 19. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 21, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 21 will be described in detail with reference to the drawings.

FIG. 22 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 22 may be combined with various embodiments of the present disclosure.

Referring to FIG. 22, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 21, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

FIG. 23 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 23 may be combined with various embodiments of the present disclosure.

Referring to FIG. 23, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 21, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information regarding a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:
establishing a radio resource control, RRC, connection with a second device;
receiving, from the second device, an SL discontinuous reception, DRX, configuration;
transmitting, to a base station, the SL DRX configuration; and
receiving, from the base station, a completion message for the SL DRX configuration,
wherein a transmission of an assistance information is not allowed before the first device receiving the completion message.

2. The method of claim 1, further comprising:
receiving, from the second device, a message requesting the assistance information.

3. The method of claim 2, further comprising:
transmitting, to the second device, the assistance information, based on the first device receiving the completion message.

4. The method of claim 1, further comprising:
transmitting, to the second device, the completion message.

5. The method of claim 5, wherein a message requesting the assistance information is transmitted to the first device by the second device, based on the completion message.

6. The method of claim 2, wherein a timer for the second device is started, based on the second device transmitting the message requesting the assistance information.

7. The method of claim 6, wherein a transmission for a message requesting additional assistance information is prohibited for the second device, while the timer is running.

8. The method of claim 6, wherein a message requesting additional assistance information is transmitted by the second device, after the timer expires.

9. The method of claim 1, wherein the SL DRX configuration includes information related to an SL DRX cycle and information related to an active time.

10. The method of claim 9, wherein the active time for the second device is maintained, based on the second device transmitting the SL DRX configuration to the first device.

11. The method of claim 1, wherein a timer for the second device is started, based on a second device transmitting the SL DRX configuration to the first device.

12. The method of claim 11, wherein a transmission for an RRC reconfiguration message is prohibited for the second device, while the timer is running.

13. The method of claim 11, wherein an RRC reconfiguration message is transmitted by the second device, after the timer expires.

14. A first device for performing wireless communication, the first device comprising:
one or more memories storing instructions;
one or more transceivers; and
one or more processors connected to the one or more memories and the one or more transceivers, wherein the one or more processors execute the instructions to:
establish a radio resource control, RRC, connection with a second device;
receive, from the second device, an SL discontinuous reception, DRX, configuration;
transmit, to a base station, the SL DRX configuration; and
receive, from the base station, a completion message for the SL DRX configuration,
wherein a transmission of an assistance information is not allowed before the first device receiving the completion message.

15. A device adapted to control a first user equipment, UE, the device comprising:
one or more processors; and
one or more memories operably connectable to the one or more processors and storing instructions, wherein the one or more processors execute the instructions to:
establish a radio resource control, RRC, connection with a second UE;
receive, from the second UE, an SL discontinuous reception, DRX, configuration;
transmit, to a base station, the SL DRX configuration; and
receive, from the base station, a completion message for the SL DRX configuration,
wherein a transmission of an assistance information is not allowed before the first UE receiving the completion message.

16. A non-transitory computer-readable storage medium storing instructions that, when executed, cause a first device to:
establish a radio resource control, RRC, connection with a second device;
receive, from the second device, an SL discontinuous reception, DRX, configuration;
transmit, to a base station, the SL DRX configuration; and
receive, from the base station, a completion message for the SL DRX configuration,
wherein a transmission of an assistance information is not allowed before the first device receiving the completion message.

17. A method for performing, by a second device, wireless communication, the method comprising:
establishing a radio resource control, RRC, connection with a first device; and
transmitting, to the first device, an SL discontinuous reception, DRX, configuration,
wherein a request of assistance information for the first device is not allowed before receiving a completion message for the SL DRX configuration from the first device.

18. The method of claim 17, further comprising:
transmitting, to the first device, a message requesting the assistance information, based on receiving the completion message.

19. A second device for performing wireless communication, the second device comprising:
one or more memories storing instructions;
one or more transceivers; and
one or more processors connected to the one or more memories and the one or more transceivers, wherein the one or more processors execute the instructions to:
establish a radio resource control, RRC, connection with a first device; and
transmit, to the first device, an SL discontinuous reception, DRX, configuration,
wherein a request of assistance information for the first device is not allowed before receiving a completion message for the SL DRX configuration from the first device.

20. The second device of claim 19, wherein the one or more processors further execute the instructions to:
transmit, to the first device, a message requesting the assistance information, based on receiving the completion message.
